(19) Europäisches Patentamt
European Patent Office
Office européen des brevets

(11) Veröffentlichungsnummer: **0 193 721**
**A2**

# (12) EUROPÄISCHE PATENTANMELDUNG

(21) Anmeldenummer: **86100718.5**

(22) Anmeldetag: **21.01.86**

(51) Int. Cl.⁴: **C 08 G 73/12**

(30) Priorität: **06.03.85 DE 3507879**

(43) Veröffentlichungstag der Anmeldung: **10.09.86 Patentblatt 86/37**

(84) Benannte Vertragsstaaten: **AT BE CH DE FR GB IT LI NL SE**

(71) Anmelder: **HÜLS AKTIENGESELLSCHAFT, Patentabteilung / PB 15 - Postfach 13 20, D-4370 Marl 1 (DE)**

(72) Erfinder: **Bartmann, Martin, Dr., Burgstrasse 35, D-4350 Recklinghausen (DE)**

(54) **Polyimide und Verfahren zu ihrer Herstellung.**

(57) Die Erfindung betrifft Polyimide der allgemeinen Formel

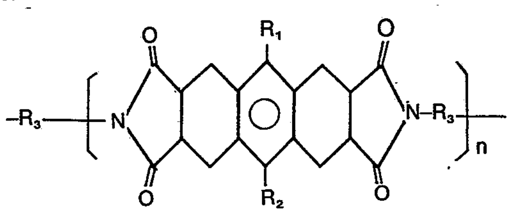

(III)

mit $R_1$, $R_2$ = H, $C_{1-3}$-Alkyl, Halogen,
$R_3$ = $C_{2-12}$-Alkylen oder

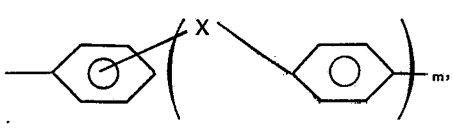

m = 0, 1,
X = $CH_2$, $C(CH_3)_2$, CO, O, S, $SO_2$ und
n = 5 bis 500

sowie ein Verfahren zu ihrer Herstellung durch Umsetzung von N,N'-Bis-maleinsäureimiden der Formel (I)

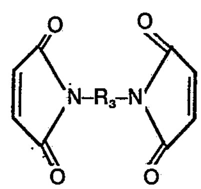

(I)

mit Benzodicyclobutenen der Formel (II)

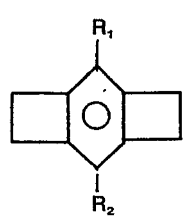

(II)

EP 0 193 721 A2

Polyimide und Verfahren zu ihrer Herstellung

Die vorliegende Erfindung betrifft neue, streng lineare Polyimide und Verfahren zu ihrer Herstellung.

Polyimide werden üblicherweise erhalten durch Umsetzung von
a) Tetracarbonsäuredianhydriden mit Diaminen,
b) Tetracarbonsäuredianhydriden mit Diisocyanaten und
c) difunktionellen cyclischen Dienen mit N,N'-Bis-maleinsäureimiden.

Die Umsetzung von Tetracarbonsäuredianhydriden mit Diaminen (vgl. US-PSS 3 677 921, 4 094 862, 4 284 461, 4 065 345 und DE-PSS 19 46 925 und 19 47 029) ist ein zweistufiges Verfahren. In der ersten Stufe werden Polyamidcarbonsäuren erzeugt, die in einer zweiten Stufe unter Verwendung hoher Temperaturen zu Polyimiden umgesetzt werden. Nachteilig ist, daß bei der 2. Stufe, der sogenanntenImidisierung, Vernetzung auftritt und die gebildeten Polyimide nicht mehr thermoplastisch verarbeitbar sind.

In den US-PSS 3 905 442, 3 983 093, 3 968 083, 3 991 004, DE-PSS 22 61 715, 22 02 102, 23 63 785, 24 16 595, 24 41 101 und der DE-OS 32 00 633 werden Lösungswege angegeben, die diesen Nachteil zwar vermeiden, dafür aber spezielle, nur aufwendig herstellbare Monomere und/oder Katalysatoren erfordern.

Bei der Umsetzung von Tetracarbonsäuredianhydriden mit Diisocyanaten, wie sie z. B. in den US-PSS 3 787 367 und 3 870 677 und in der Literaturstelle J. Polym. Sci. Polym. Chem. Ed., 18, 1905 - 1909 (1980), beschrieben ist, erhält man zwar einstufig unvernetzte und verarbeitbare Polyimide; nachteilig ist jedoch der Einsatz der Diisocyanate, die üblicherweise aus den in den oben erwähnten Verfahren verwendeten Diaminen in einem zusätzlichen Reaktionsschritt unter Verwendung des toxischen Phosgens hergestellt werden müssen.

Die Umsetzung von N,N'-Bis-maleinsäureimiden mit Bis-dienen (vgl. US-PS 3 344 071 sowie folgende Literaturstellen: Macromol. Symp. 28, 611

(1982), Eur. Polym. J. $\underline{13}$, 179 (1977), J. Polym. Sci. Polym. Chem. Ed. $\underline{11}$, 2143 (1973) und Vysokomol. Soedin, Ser. A $\underline{18}$, 926 (1976) oder mit Dienen mit cheletropen Gruppen (DE-PSS 11 00 291, 11 24 690 und 11 45 797) liefert ebenfalls lineare Polyimide. Grundsätzlicher Nachteil dieser Umsetzung ist die Tatsache, daß derartige "Poly-Diels-Alder-Reaktionen" bei erhöhter Temperatur reversibel sind.

Die aus dem Stand der Technik bekannten Polyimide sind also entweder vernetzt oder thermisch unbeständig oder nur aufwendig herstellbar.

Es wurden jetzt Polyimide gefunden, die diese Nachteile nicht aufweisen. Sie sind durch Umsetzung von N,N'-Bis-maleinsäureimiden der Formel (I)

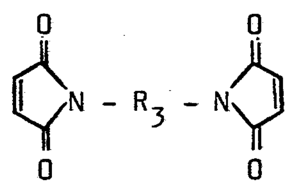

I

mit Benzodicyclobutenen der Formel (II) erhältlich.

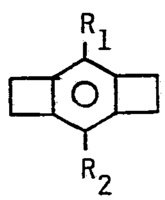

II

Dabei stehen $R_1$ und $R_2$ jeweils für eine Alkylgruppe mit bis zu 3 C-Atomen, Wasserstoff oder ein Halogen und $R_3$ für eine $C_{2-12}$-Alkylengruppe oder eine Gruppe der Struktur 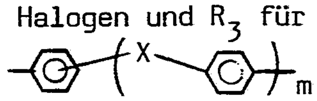 mit m = 0, 1 und X = $CH_2$, $C(CH_3)_2$, CO, O, S oder $SO_2$.

Das Reaktionsverhalten der Benzodicyclobutene ist überraschend. Zwar war bekannt, daß Benzocyclobutene Dienreaktivität besitzen (siehe I. L. Klundt, Chem. Rev. $\underline{70}$, 471 (1970) und W. Oppholzer, Angew. Chem. $\underline{89}$, 10 - 24 (1977), im Falle der Benzodicyclobutene steht die reaktive Dienform a) aber in Mesomerie mit Grenzstrukturen wie b) und c), die radikalischen Charakter besitzen und daher ganz anders reagieren sollten.

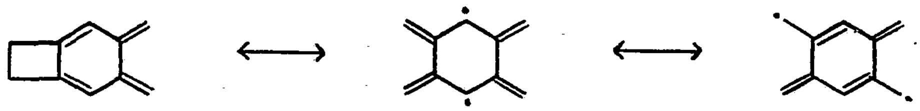

a) b) c)

Überraschenderweise kommt es jedoch nicht im nennenswerten Umfang zu störenden radikalischen Nebenreaktionen. Überraschend ist auch, daß die erhaltenen Diels-Alder-Produkte im Gegensatz zu den Produkten aus dem Stand der Technik thermisch stabil sind.

Die erfindungsgemäß geeigneten N,N'-Bis-maleinsäureimide der Formel I werden zweckmäßig aus Maleinsäureanhydrid und einem Diamin, z. B. gemäß US-PS 2 444 536, hergestellt. Auch auf andere Weise hergestellte Imide sind erfindungsgemäß geeignet. Bis-maleinsäureimide, die von der allgemeinen Formel I umfaßt werden, sind beispielsweise:

p-Phenylen-bis-maleinsäureimid
m-Phenylen-bis-maleinsäureimid
4,4'-Bis-maleinsäureimidodiphenylmethan
4,4'-Bis-maleinsäureimidodiphenylether
4,4'-Bis-maleinsäureimidodiphenylsulfon
4,4'-Bis-maleinsäureimidobenzophenon
1,2-Bis-maleinsäureimidobutan
1,6-Bis-maleinsäureimido-2,2,4- und/oder -2,4,4-trimethylhexan
1,6-Bis-maleinsäureimidohexan
1,12-Bis-maleinsäureimidododecan
2-Methyl-1,5-bis-maleinsäureimidopentan
2-Ethyl-1,4-bis-maleinsäureimidobutan

Bevorzugt sind die Imide, bei denen $R_3$ für einen difunktionellen aromatischen Rest steht. Selbstverständlich können auch Mischungen verschiedener Imide eingesetzt werden.

Bei den Benzodicyclobutenen haben $R_1$ und $R_2$ vorzugsweise die gleiche Bedeutung, insbesondere stehen sie für Wasserstoff oder Methyl. Beispielhaft seien folgende Benzocyclobutene aufgeführt:

Benzo-(1.2:4.5)-dicyclobuten
3,6-Dimethylbenzo-(1.2:4.5)-dicyclobuten
3,6-Dibrombenzo-(1.2:4.5)-dicyclobuten.

Die Benzodicyclobutene der allgemeinen Formel II können nach den in der Literatur beschriebenen Methoden hergestellt werden, z. B. nach J. Am. Chem. Soc. 100, 2892 (1978), J. Org. Chem. 46, 4608 (1981), J. Am. Soc. 82, 2524 (1960) und Tetrah. Let. 46, 4569 (1978).

Die Reaktion wird üblicherweise in etwa äquimolaren Mengen in aprotischen Lösemitteln bei Temperaturen oberhalb von 100 °C durchgeführt.

Bei der praktischen Durchführung hat es sich als zweckmäßig erwiesen, die Reaktion in Lösung durchzuführen. Am günstigsten ist hierfür ein Lösemittel, das sowohl gegenüber den Monomeren als auch gegenüber dem Reaktionsprodukt inert ist und in dem die Monomeren und die gebildeten Polymeren zumindest weitgehend löslich sind. Dipolaraprotische oder halogenierte organische Verbindungen, insbesondere mit Siedepunkten über 100 °C, werden bevorzugt. Besonders vorteilhaft sind Sulfolan (Tetrahydrothiophendioxid), Dimethylsulfoxid, Diphenylsulfon, Chlornaphthalin, Dichlorbenzol, Nitrobenzol oder Diphenylether. Natürlich können auch Gemische dieser Lösemittel eingesetzt werden. Lösemittel mit einem Siedepunkt unter 100 °C, z. B. Chloroform oder Dichlormethan, können verwendet werden, wenn der Druck im System über Normaldruck hinaus erhöht wird. Der bevorzugte Konzentrationsbereich liegt zwischen 1 und 30 Gewichtsprozent Monomeren, bezogen auf die Summe aus Monomeren und Lösemittel. Die Reaktion wird vorzugsweise bei einer Temperatur zwischen 170 und 250 °C durchgeführt.

Es hat sich als günstig erwiesen, die Polymerbildungsreaktion unter Bedingungen durchzuführen, die die radikalische Polymerisation der Bis-maleinsäureimide verhindern. Beispielsweise können geringe Mengen von Stabilisatoren auf Basis von sterisch gehinderten Phenolen oder Hydrochinonen zugesetzt werden.

Arbeitet man in Abwesenheit von Stabilisatoren, so setzt man, bezogen auf 1 Mol Benzodicyclobuten, 0,8 bis 1 Mol Bis-maleinsäureimid zu. Vorzugsweise wird letzteres in der Wärme portionsweise zum Benzodicyclobuten gegeben.

Arbeitet man in Gegenwart von Stabilisatoren, so setzt man, wiederum bezogen auf 1 Mol Benzodicyclobuten, 0,8 bis 1,2 Mole Bis-maleinsäureimid ein.

Die erhaltenen Polyimide weisen die allgemeine Formel (III)

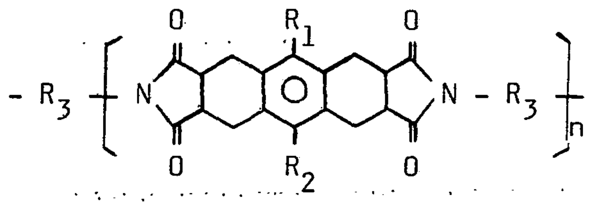

(III)

mit n = 5 bis 500 auf. Endgruppe der erhaltenen Polyimide ist die Gruppe

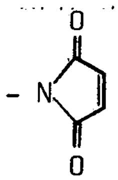

Setzt man eine relativ große Menge Benzodicyclobuten ein, so können sich auch Endgruppen der Formel

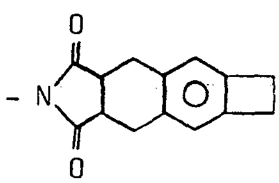

bilden.

Die erhaltenen Polyimide sind streng linear und bis mindestens 400 °C thermisch stabil. Sie lassen sich in Gegenwart der üblichen Zusatzstoffe, wie z. B. Stabilisatoren, Pigmente und Verarbeitungshilfsmittel, und gegebenenfalls in Abmischungen mit anderen Polymeren thermoplastisch zu Formkörpern hoher Wärmeformbeständigkeit verarbeiten.

Die nachfolgenden Beispiele dienen zur weiteren Erläuterung der Erfindung, sollen diese jedoch nicht beschränken.

Beispiel 1

Eine bei Raumtemperatur hergestellte Lösung von 4,4 g 4,4'-Bis-maleinsäureimidodiphenylmethan, 1,6 g Benzo-(1.2:4.5)-dicyclobuten und 0,01 g Hydrochinon in 50 ml Sulfolan wird in einer Stickstoffatmosphäre 6 Stunden bei 210 °C gerührt. Nach dem Abkühlen erhält man eine viskose Lösung, aus der das gebildete Polyimid durch Eingießen von 100 ml Methanol gefällt wird. Das weiße, pulverförmige Produkt wird abgesaugt und mit Methanol gewaschen und anschließend 10 Stunden im Ölpumpenvakuum bei 100 °C getrocknet.

Ausbeute : 5,7 g (95 %)
J-Wert : 92 ml/g (gemessen in einer 1 %igen Lösung in N-Methylpyrrolidon bei 25 °C)
IR-Spektrum: 1 780 $cm^{-1}$ und 1 720 $cm^{-1}$ (typisches Imid-Signal)
1 520 $cm^{-1}$, 1 380 $cm^{-1}$, 1 170 $cm^{-1}$

Die out of plane-Schwingung der Doppelbindungen des eingesetzten Bismaleinsäureimids bei 690 $cm^{-1}$ war im Produkt nicht mehr erkennbar. Das Produkt ist laut TGA-Analyse bis 450 °C ($N_2$) stabil. Der Gewichtsverlust ist kleiner als 5 %.

Beispiel 2

Analog zu Beispiel 1 wurde eine Lösung aus 4,4 g 4,4'-Bis-maleinsäureimidodiphenylmethan, 1,9 g 3,6-Dimethylbenzo-(1.2:4.5)-dicyclobuten und 0,01 g 2,6-Di-tert.-butyl-4-methylphenol in einem Lösemittelgemisch aus 25 ml Sulfolan und 25 ml Diphenylether hergestellt und bei 230 °C umgesetzt.

Ausbeute : 5,8 g (93 %)
$\overline{M}_w$ : ca. 90 000 (laut GPC-Analyse in Hexafluorisopropanol)
IR-Spektrum: bis auf geringe Unterschiede im Finger-Print-Bereich keine Unterschiede zum Spektrum des Produktes aus Beispiel 1

Das Produkt ist laut TGA-Analyse bis 450 °C ($N_2$) stabil. Der Gewichtsverlust liegt unter 5 %. Bei Temperaturen über 500 °C tritt Zersetzung ein.

Beispiel 3

Analog zu Beispiel 1 wurde eine Lösung von 2,2 g p-Phenylen-bis-maleinsäureimid, 1,56 g 3,6-Dimethylbenzo-(1.2:4.5)-dicyclobuten und 0,01 g 2,6-Di-tert.-butyl-4-methylphenol in 50 ml Sulfolan hergestellt und bei 230 °C umgesetzt.

Ausbeute : 3,45 g (92 %)
J-Wert : 58 ml/g (gemessen in einer 1 %igen Lösung in N-Methylpyrrolidon bei 25 °C entsprechend DIN 53 728)
IR-Spektrum: 1 780 $cm^{-1}$ und 1 710 $cm^{-1}$ (Imid-Signale)
1 510 $cm^{-1}$, 1 370 $cm^{-1}$, 1 170 $cm^{-1}$

Beispiel 4

Zu einer unter Stickstoff bei 220 °C gerührten Lösung von 1,60 g (10,1 mmol) 3,6-Dimethylbenzo-(1.2:4.5)-dicyclobuten in 25 ml Sulfolan tropft man portionsweise über einen Zeitraum von 4 Stunden eine Lösung von 3,58 g (10 mmol) 4,4'-Bis-maleinsäureimidodiphenylmethan in 25 ml Sulfolan. Man hält die Mischung 3 Stunden bei dieser Temperatur, kühlt sie ab und isoliert das Produkt durch Eingießen in 100 ml Methanol.

Ausbeute : 4,92 g (95 %)
J-Wert : 66 ml/g
IR-Spektrum: siehe Beispiel 2

Beispiel 5

1,6 g (10,1 mmol) 3,6-Dimethylbenzo-(1.2:4.5)-dicyclobuten werden analog zu Beispiel 4 mit 3,18 g (10 mmol) eines Isomerengemisches aus 1,6-Bis-maleinsäureimido-2,2,4- und -2,4,4-trimethylhexan umgesetzt.

Ausbeute : 4,59 g (96 %)
J-Wert : 52 ml/g
Erweichungspunkt: 188 bis 193 °C

Patentansprüche:

1. Polyimide der allgemeinen Formel

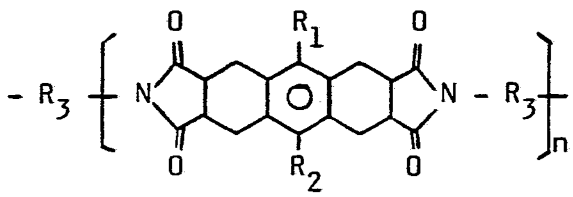
,

wobei $R_1$ und $R_2$ jeweils eine Alkylgruppe mit 1 bis 3 C-Atomen, Wasserstoff oder ein Halogen, $R_3$ eine Alkylengruppe mit 2 bis 12 C-Atomen oder eine Gruppe der Struktur 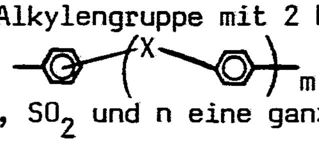 mit m = 0,1 und X = $CH_2$, $C(CH_3)_2$, CO, O, S, $SO_2$ und n eine ganze Zahl von 5 bis 500 bedeuten.

2. Polyimide nach Anspruch 1,
dadurch gekennzeichnet,
daß $R_3$ die Struktur -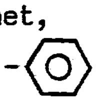-$CH_2$-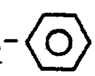- oder -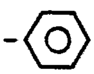-O-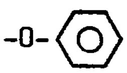- aufweist.

3. Polyimide nach Anspruch 1,
dadurch gekennzeichnet,
daß m = 0 ist.

4. Polyimide nach den Ansprüchen 1 bis 3,
dadurch gekennzeichnet,
daß $R_1$ und $R_2$ jeweils Wasserstoff bedeuten.

5. Polyimide nach den Ansprüchen 1 bis 3,
daduch gekennzeichnet,
daß $R_1$ und $R_2$ jeweils eine Methylgruppe bedeuten.

6. Verfahren zur Herstellung von Polyimiden nach Ansprüchen 1 bis 5,
dadurch gekennzeichnet,
daß N,N'-Bis-maleinsäureimide der Formel (I)

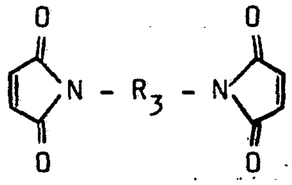
I

mit Benzodicyclobutenen der Formel (II)

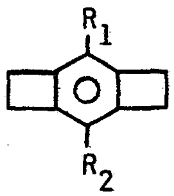
II

umgesetzt werden.

7. Verfahren nach Anspruch 6,
dadurch gekennzeichnet,
daß N,N'-Bis-maleinsäureimide mit Benzodicyclobutenen im Molverhältnis $n : 1$ mit $1{,}1 < n < 1$, vorzugsweise $1{,}05 < n < 1$, umgesetzt werden.

8. Verfahren nach den Ansprüchen 6 und 7,
dadurch gekennzeichnet,
daß die Reaktion bei einer Temperatur über 100 °C durchgeführt wird.

9. Verfahren nach den Ansprüchen 6 bis 8,
dadurch gekennzeichnet,
daß die Reaktion in einem inerten Lösemittel durchgeführt wird.

10. Verfahren nach Anspruch 9,
dadurch gekennzeichnet,
daß als Lösemittel Sulfolan verwendet wird.

11. Verfahren zur Herstellung von Polyimiden nach den Ansprüchen 1 bis 5,
dadurch gekennzeichnet,
daß Mischungen von N,N'-Bis-maleinsäureimiden der Formel (I) und/oder von Benzodicyclobutenen der Formel (II) zur Reaktion gebracht werden.